(19) **Europäisches Patentamt / European Patent Office / Office européen des brevets**

(11) **EP 2 326 027 B1**

(12) **EUROPEAN PATENT SPECIFICATION**

(45) Date of publication and mention of the grant of the patent:
**01.05.2019 Bulletin 2019/18**

(51) Int Cl.:
*H04B 7/02* $^{(2018.01)}$    *H04B 1/7083* $^{(2011.01)}$
*H04B 1/711* $^{(2011.01)}$

(21) Application number: **09812630.3**

(22) Date of filing: **11.08.2009**

(86) International application number:
**PCT/CN2009/073190**

(87) International publication number:
**WO 2010/028564 (18.03.2010 Gazette 2010/11)**

(54) **MULTI-PATH SEARCHING APPARATUS AND METHOD SUPPORTING TRANSMISSION DIVERSITY MODE DETECTION**

MEHRWEG-SUCHVORRICHTUNG UND VERFAHREN ZUR UNTERSTÜTZUNG DER ERKENNUNG EINES ÜBERTRAGUNGSDIVERSITÄTSMODUS

APPAREIL ET PROCÉDÉ DE RECHERCHE DE TRAJETS MULTIPLES PRENANT EN CHARGE UNE DÉTECTION DE MODE DE DIVERSITÉ DE TRANSMISSION

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **11.09.2008 CN 200810141900**

(43) Date of publication of application:
**25.05.2011 Bulletin 2011/21**

(73) Proprietor: **Sanechips Technology Co., Ltd.**
**Shenzhen, Guangdong 518055 (CN)**

(72) Inventor: **YANG, Xianlin**
**Shenzhen**
**Guangdong 518057 (CN)**

(74) Representative: **CMS Cameron McKenna Nabarro Olswang LLP**
**Cannon Place**
**78 Cannon Street**
**London EC4N 6AF (GB)**

(56) References cited:
**EP-A1- 0 825 737        WO-A2-2007/035737**
**CN-A- 1 835 612        CN-A- 101 183 914**
**US-A1- 2004 252 656        US-A1- 2005 047 492**

## Description

## TECHNICAL FIELD

The present disclosure relates to a downlink receiving technology for a baseband processor of a terminal in a WCDMA (Wideband Code Division Multiple Access) mobile communication system, particularly to a multipath searching apparatus and method supporting dual-mode cell searching and transmit diversity (i.e. Space Time Transmit Diversity, STTD) detection.

## BACKGROUND

In the prior art, for a wideband mobile communication system (i.e. WCDMA), signals received by a mobile station are time-varying multipath signals having different degrees of fading and delay, and with a RAKE receiver flat fading and frequency selective fading of a radio channel may be overcome well. Fading decreases with increase of bandwidth. When the channel bandwidth is sufficient and multipath components delay more than one chip period, these signals may be regarded as a plurality of duplicates of a same signal, so that they may be combined in a diversity receiver, which is a theoretical basis for forming a RAKE receiver.

During reception of the WCDMA signal, the time-varying feature of the radio channel must be considered. Firstly, it is required to identify a time delay location of a main multipath, i.e., multipath searching; and then the RAKE receiver can be synchronized to a border to realize RAKE combination. The basic unit for measuring time difference of multipath signals is chip, and generally a 1/4 - 1/2 chip precision is adopted and the multipath location is refreshed with a period of dozens of milliseconds. The time-varying feature of the radio channel results in that the RAKE receiver must frequently lock on the phase and amplitude variation of the multipath signals under fast fading. The refreshing rate in the lock-on process is very high, typically refreshing within 1ms. The WCDMA system may adopt a known pilot symbol to resume the channel and provide real time channel state estimation for given RAKE branches, so as to eliminate a phase distortion generated on the multipath channel and realize combination with the utmost proportion.

Most current terminals support dual-mode or multi-mode design, and how to handover between different modes is a crucial but difficult point in a multi-mode system design. Taking a GSM/WCDMA dual-mode system as an example, there are about 7 GSM idle frames of W time slot length every 120ms available for searching and measuring a WCDMA cell, while the time required for one time of WCDMA cell initial searching is much longer than the period of time reserved by the system, therefore it is impossible to initiate the WCDMA cell initial searching so as to implement the dual-mode cell handover when the system is in GSM camp.

Additionally, the transmission diversity (i.e.

STTD) mode which may improve performance of signal reception should also be considered in the design of the terminal. Before the reception, it is required to determine whether the signal adopts an STTD mode; each cell transmits a modulation signal over a synchronization channel (SCH) to indicate whether a primary common control physical channel (P-CCPCH) adopts the STTD mode. Generally, implementation of the STTD detection requires decoding the SCH channel and a separate set of apparatus is used to decode the SCH channel, thus hardware overhead is quite high.

The RAKE receiver is a major component for the WCDMA baseband processing, and the performance of the multipath searching apparatus has a great influence on the performance of the RAKE receiver. However, there is lack of a multipath searching apparatus with excellent performance in the prior art, therefore the multipath border cannot be searched out quickly and accurately, thus reliable synchronization for the RAKE receiver cannot be provided.

Document US 2004/252656 A1 (SHIU OA-SHAN [US] ET AL) 16 December 2004 (2004-12-16) discloses a method of search processing, operable with a searcher for searching in accordance with search parameters and for generating search results, the method comprises: sending a first set of search parameters to the searcher; receiving a first plurality of search results generated in response to the first set of search parameters; selecting a subset of the first plurality of search results; forming a plurality of selected PN locations from the PN locations of the subset and the PN location of a stored search result; sending the plurality of selected PN locations to the searcher; sending a second set of search parameters to the searcher; receiving a second plurality of search results generated in response to the second set of search parameters and the plurality of selected PN locations; selecting the highest energy search result from the second plurality of search results; and storing the highest energy search result to form the stored search result.

Document EP 0 825 737 A1 (NIPPON TELEGRAPH & TELEPHONE [JP] NTT OOCOMO INC [JP]) 25 February 1998 (1998-02-25) discloses a signal transmission method in a mobile communication system in a direct sequence CDMA communication system which transmits a wideband signal spread using a spreading code with a rate higher than an information rate, said signal transmission method characterized by comprising the steps of: using a first spreading code group and a second spreading code group, said first spreading code group being common to respective base stations and having a period equal to an information symbol period, and said second spreading code group being different from base station to base station and having a period longer than the information symbol period; and masking, when transmitting a signal which is doubly spread using a first spreading code in said first spreading code group and a second spreading code in said second spreading code group, said second spreading code for M symbols at fixed intervals, where M is a natural number equal to or greater than one.

Document US 2005/047492 A1 (AMERGA MESSAY [US] ET AL) 3 March 2005 (2005-03-03) discloses a method of searching, the method comprises: correlating a received signal with a synchronization sequence to produce a plurality of search results; comparing a stored offset with the offset of one of the plurality of search results; and removing the search result from the plurality of search results when its offset is within a pre-determined threshold of the stored offset.

**SUMMARY**

The present disclosure provides a multipath searching apparatus and method supporting dual-mode cell searching and transmit diversity mode detection, which employs whole-range scanning of a WCDMA cell to realize searching and measurement of the WCDMA cell under the GSM mode. By virtue of the multipath searching apparatus, the STTD detection can be realized, thereby the multipath border is searched out quickly and accurately and high-performance reception of signals is realized.

The technical solution of the present disclosure is provided by the appended independent claims 1, 4 and 7.

Further embodiments of the invention are provided in the dependent claims.

The present disclosure provides a multipath searching apparatus and method supporting transmit diversity mode detection. This apparatus supports the GSM/WCDMA dual-mode cell searching, improves the multipath searching performance through coherent accumulation of symbols, and realizes STTD detection. Therefore, by virtue of the multipath searching apparatus, measurement of the received signal code power (RSCP) may be conveniently implemented, the multipath border may be searched out quickly and precisely, and reliable synchronization may be provided for the RAKE receiver, thereby high-performance reception of signals is achieved.

**BRIEF DESCRIPTION OF THE DRAWINGS**

Fig. 1 shows a dual-antenna transmit pattern under a transmit diversity mode according to the present disclosure;

Fig. 2 shows a block diagram of a multipath searching apparatus system according to the present disclosure;

Fig. 3 shows a block diagram of a chip-level processing and multipath searching unit according to the present disclosure;

Fig. 4 shows a hardware structural diagram of a WCDMA mode scrambling code initial phase calculating and data channel unit according to the present disclosure;

Fig. 5 shows a hardware structural diagram of a GSM mode scrambling code initial phase configuring and data channel unit according to the present disclosure;

Fig. 6 shows a hardware structural diagram of a chip-level data descrambling-despreading and correlating unit according to the present disclosure;

Fig. 7 shows a hardware structural diagram of a dual-antenna symbol data generating unit according to the present disclosure;

Fig. 8 shows a hardware structural diagram of a symbol data coherent accumulating unit according to the present disclosure;

Fig. 9 shows a hardware structural diagram of a symbol power calculating and AGC (automatic gain control) power weighting unit according to the present disclosure;

Fig. 10 shows a hardware structural diagram of a symbol power accumulating unit according to the present disclosure;

Fig. 11 shows a diagram of WCDMA cell searching process in GSM camp according to the present disclosure; and

Fig. 12 shows a diagram of STTD detection process according to the present disclosure.

**DETAILED DESCRIPTION**

The present disclosure provides a multipath searching apparatus and method supporting transmit diversity detection. In order to make the objective, technical solution, and advantages of the present disclosure clearer and more apparent, the present disclosure will be illustrated hereinafter in detail with reference to the accompanying drawings and embodiments.

In order to solve the problem existing in the WCDMA cell searching in GSM camp, the present disclosure employs a multipath searching apparatus supporting dual-mode cell searching and STTD detection, so that the system can search out multipath border quickly and accurately to realize high-performance reception of signals, wherein the core idea is that: the present disclosure is a multipath searching apparatus applicable under WCDMA/GSM dual-mode, for supporting WCDMA cell searching and measurement when the WCDMA/GSM dual-mode is in GSM camp, and implementing physical layer work of handing over from the GSM mode to the WCDMA mode. Scrambling code initial phase calculating and IQ data channel under the WCDMA mode or scrambling code initial phase configuring and IQ data channel under the GSM modes is selected to output, coherent accumulation of symbol data is introduced before calculation of symbol power, thus reliability and speed of the multipath searching is improved. The obtained multipath power and multipath border are reported to system software, through processing by the software, the current cell is measured, and the obtained values such as RSCP (received signal code power) and SIR (signal to interference ratio) are reported to an upper layer. And also, the system software processes the multipath border (finger border) and then configures the processed multipath border to the RAKE receiver, the RAKE receiver implements combination of the fingers with the utmost proportion, determines and detects the STTD mode according to the multipath power obtained from the multipath searching.

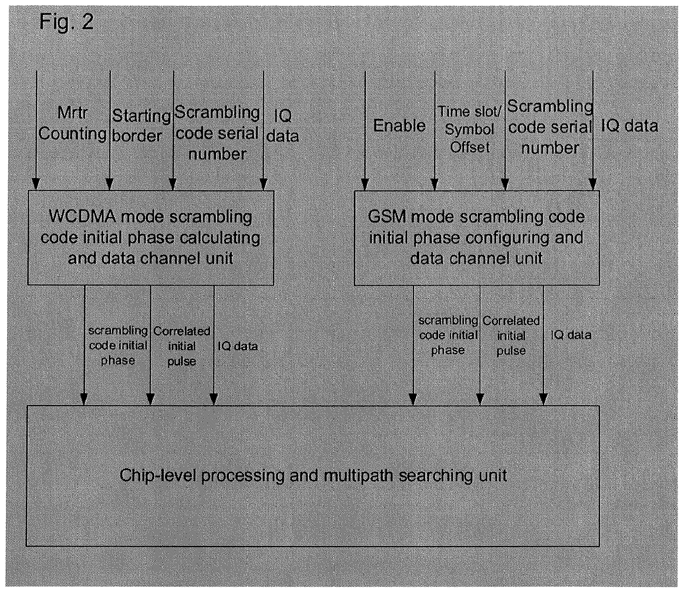

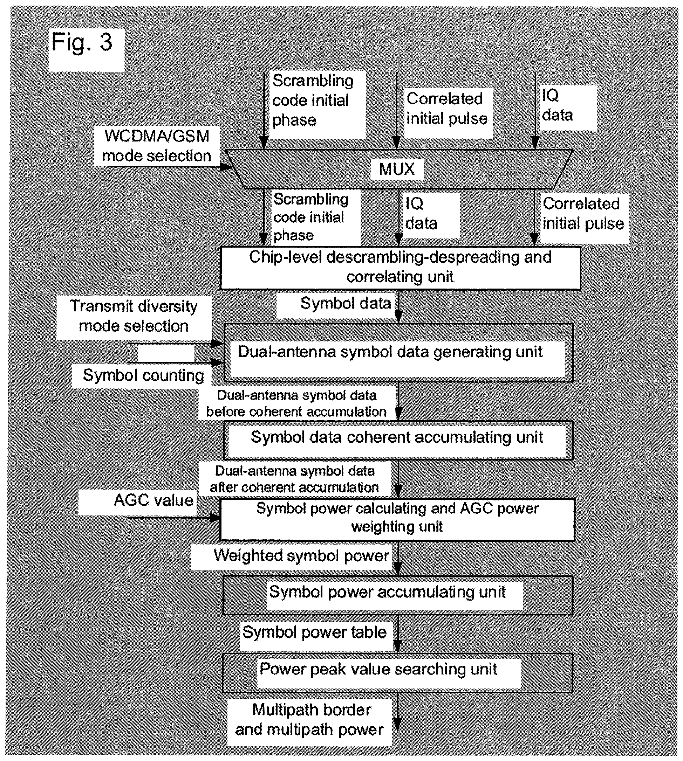

According to the core idea, the present disclosure adopts a multipath searching apparatus supporting WCDMA cell searching and measurement when the WCDMA/GSM dual-mode is in GSM camp. As shown in Fig. 2, the apparatus comprises: a WCDMA mode scrambling code initial phase calculating and data channel unit, a GSM mode scrambling code initial phase configuring and data channel unit, and a chip-level processing and multipath searching unit. The chip-level processing and multipath searching unit, as shown in Fig. 3, specifically comprises a chip-level data descrambling-despreading and correlating unit, a dual-antenna symbol data generating unit, a symbol data coherent accumulating unit, a symbol power calculating and AGC (automatic gain control) power weighting unit, a weighting symbol power accumulating unit, and a power peak value searching unit; wherein the WCDMA mode scrambling code initial phase calculating and data channel unit and the GSM mode scrambling code initial phase configuring and data channel unit are respectively connected to a mode select switch MUX (Multiplexer). The information that whether the work mode of the current terminal is the WCDMA mode or the GSM mode is determined and informed by an upper layer of the system, and the two modes cannot be effective simultaneously, thus the mode select switch MUX selects corresponding data and control information according to the mode informed by the upper layer of the system. When the upper layer of the system informs a WCDMA mode, the WCDMA mode scrambling code initial phase calculating and data channel unit is actuated to perform online collection of the IQ (I indicates inphase component, and Q indicates quadrature component) symbol data, and to implement a scrambling code initial phase calculation (or configuration) and an IQ data channel according to the collected IQ data, scrambling code serial number and starting border, and to output the scrambling code initial phase, correlated initial pulse and the IQ data to the descrambling-despreading unit. Since the IQ symbol data is collected online under the WCDMA mode, a buffer is not required. Because of the online manner, a nearest symbol border may be real time searched out according to the starting border informed by the system, symbol offset and time slot offset between the actual starting border and the starting border configured by the system are calculated, and the scrambling code sequence initial phase corresponding to the actual starting border may be further obtained through recursive computation according to the scrambling code index. This manner is the design method with the best real time performance for IQ data descrambling and despreading in the WCDMA system without intervention of too many software (for example directly configuring the scrambling code initial phase), wherein the lost time under a border condition does not exceed two symbols. The dominant work mode for the apparatus of the present disclosure is the WCDMA mode.

When the upper layer of the system informs a GSM CAMP, the GSM mode scrambling code initial phase configuring and data channel unit is started for implementing the IQ data collection, and performing the scrambling code initial phase calculation by using scrambling code serial number configured by software, time slot/ symbol offset , and outputting the scrambling code initial phase, correlated initial pulse and the IQ data to the descrambling-despreading unit. Since the work mode is the GSM mode in GSM CAMP, the system utilizes GSM idle frames to search for the WCDMA cell; in this work scenario the IQ data must be collected offline, thus a buffer is required; the system hardware starts the IQ data collection and save the collected data in the buffer. After the data collection is completed, the system hardware informs the software through interruption.

The chip-level data descrambling-despreading and correlating unit, connected to the WCDMA mode scrambling code initial phase calculating and data channel unit and the GSM mode scrambling code initial phase configuring and data channel unit, is used for receiving the scrambling code initial phase, the correlated initial pulse and the IQ data corresponding to one of the two modes which is selected by the mode select switch MUX; the received chip-level data is subjected to the descrambling-despreading and correlating unit, then the descrambled IQ data enters into a correlator, the correlator performs coherent accumulation of the chip-level data to obtain a symbol data, and the symbol data (first-antenna symbol data) is outputted to the dual-antenna symbol data generating unit.

The dual-antenna symbol data generating unit, connected to the chip-level data descrambling-despreading and correlating unit and the symbol data coherent accumulating unit respectively, is used for calculating second-antenna symbol data according to the first-antenna symbol data, and outputting the dual-antenna symbol data to the symbol data coherent accumulating unit;

the symbol data coherent accumulating unit, connected to the dual-antenna symbol data generating unit and the symbol power calculating and AGC power weighting unit respectively, is used for performing coherent accumulation of the received dual-antenna symbol data to complete vector accumulation of continuous symbol data within a certain time range, and outputting the coherent accumulated dual-antenna symbol data to the symbol power calculating and AGC power weighting unit;

The symbol power calculating and AGC power weighting unit, connected to the symbol data coherent accumulating unit and weighting symbol power accumulating unit respectively, is used for calculating symbol power according to the coherent accumulated dual-antenna symbol data and performing AGC weighting of the symbol power to control the power gain within a fixed range, and outputting the weighted symbol power to the symbol power accumulating unit;

The symbol power accumulating unit, connected to the symbol power calculating and AGC power weighting unit and the power peak value searching unit respectively, is used for performing non-coherent accumulation of the weighted symbol power to obtain a symbol power table for multipath searching, and outputting the symbol power table to the power peak value searching unit;

The power peak value searching unit is used for implementing the multipath information searching in the symbol power table, obtaining the multipath information in the symbol power table through power peak value searching, and reporting the obtained multipath power and multipath border to the system software.

Besides the multipath searching, the multi-purpose and high-performance multipath searching apparatus provided by the present disclosure may further realize STTD detection, and realize WCDMA cell searching and received signal code power measurement in GSM CAMP.

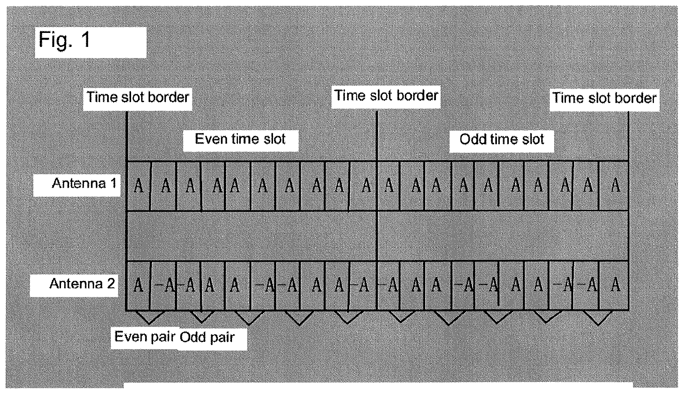

Besides, the transmit diversity (i.e. STTD) mode which may improve the performance of signal reception should also be considered in the design of the terminal. Before signals are received, it is required to determine whether the signals are transmitted under the STTD mode. Under the STTD mode, the base station performs transmission through dual antennae, and the signals transmitted by each antenna will have different channel features; pilot coding pattern on the P-CPICH (primary common pilot channel) under the transmit diversity mode has a particular rule, and the pilot coding pattern is shown in Fig. 1. Under a non-STTD mode, the base station side transmits the first-antenna data; under the STTD mode, the base station side transmits both the first-antenna data and the second-antenna data, and the phase relationship between the signals transmitted by the dual antennae is fixed as shown in Fig. 1. If the second-antenna data is defined by symbol pair from the even time slot border, then the symbol pairs may be even symbol pair, odd symbol pair, even symbol pair, ..., and so forth successively, wherein the phases of the two symbols in each symbol pair are inverse.

According to Fig. 1, a radio channel impulse response corresponding to the first antenna is set to $H_1(t)$, a radio channel impulse response corresponding to the second antenna is set to $H_2(t)$, and a symbol transmitted from the base station side is set to S(t). If two symbols of mutually even pair or odd pair starting from the time slot border is coherently accumulated and phase offset between contiguous symbols is neglected, then under the condition that transmission power of symbols is consistent, the CPICH symbol received by the terminal is $2H_1(t) \otimes S(t)$ under the non-STTD mode, and the CPICH symbol received by the terminal is $\sqrt{2}\, H_1(t) \otimes S(t)$ under the STTD mode, which is principle of the STTD detection through symbol coherent accumulation. In actual condition, multiple times of coherent accumulation of even symbol pair (or odd symbol pair) will improve performance of the STTD detection.

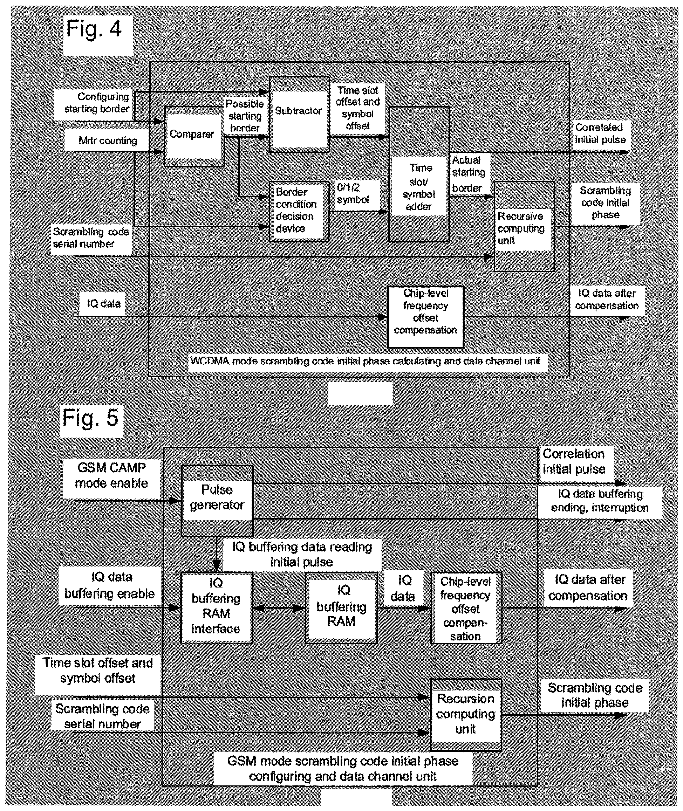

Fig. 4 shows a WCDMA mode scrambling code initial phase calculating and data channel unit. The upper layer of the system determines and informs that the current work mode of the terminal is a WCDMA mode, and the upper layer has already known the frame border of the current cell through cell searching. The WCDMA mode scrambling code initial phase calculating and data channel unit waits for arrival of a next symbol border by using a comparer according to this border. when the next symbol border arrives, the hardware obtains the current number of time slots and symbols; the number of time slots and symbols corresponding to the starting border informed by the upper layer is subtracted from the current number of time slots and symbol to obtain the time slot offset and symbol offset of the scrambling code, and then in combination with the serial number of the scrambling code, the initial phase of the scrambling code is obtained through three-level recursive computation. The recursive computation here is usually designed to be implemented within dozens of sampling clocks, and if the next symbol border arrives during the recursive computation, the symbol offset obtained through calculation by a subtractor needs plus 1. Considering that it is convenient to perform the symbol coherent accumulation under the STTD mode, the scrambling code is designed, as shown in Fig. 1, to start from an even symbol, which may induce one symbol delay, thus in this case the symbol offset obtained through calculation by the substractor also needs plus 1. Comprehensively considering the above two border conditions, the symbol offset of the scrambling codes may be delayed by one or two symbols. A border condition decision device is designed to determine a relationship between an actual starting border and a possible starting border, an actual symbol offset and time slot offset is calculated by using a time slot/symbol adder, and a correlated initial pulse is emitted to inform the scrambling code sequence generating and correlator unit.

The IQ data channel as shown in Fig. 4 merely comprises a chip-level frequency offset compensation module; the hardware supports a bypass mode for frequency offset compensation. When it is required to perform frequency offset compensation to the chip-level data, frequency offset estimation parameters have already been collected by the upper layer and is informed to the frequency offset compensation module by the software; the chip-level frequency offset compensation is of quite a low hardware overhead and does not change the real-time feature of the system, and may also improve the phase feature of the IQ data and thus may improve the performance of the multipath searching.

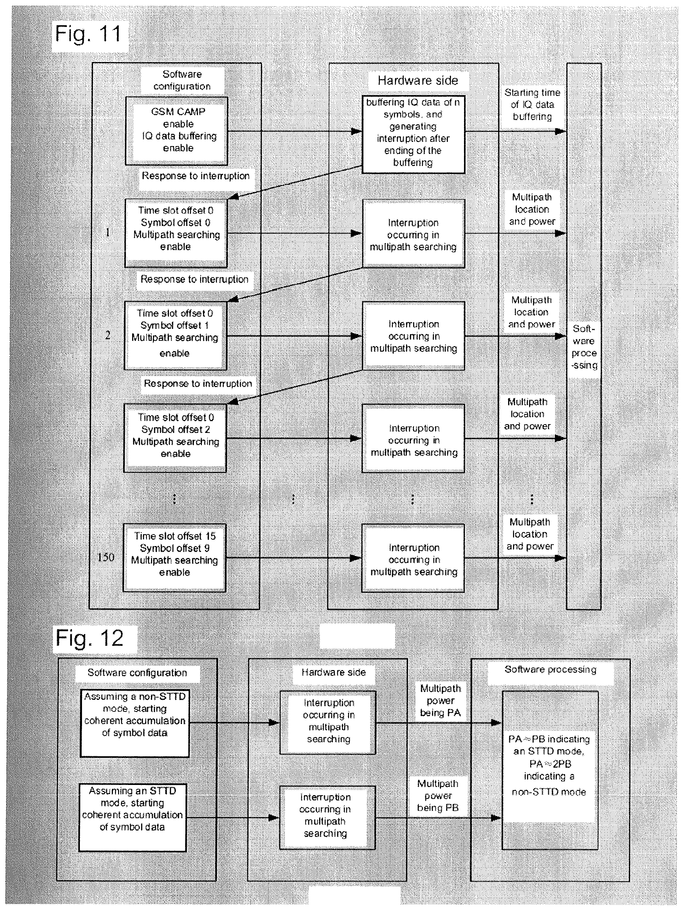

Fig. 5 shows a GSM mode scrambling code initial phase configuring and data channel unit. The upper layer of the system determines and informs that the current work mode of the terminal is a GSM mode. When the WCDMA cell is in GSM CAMP, the system cannot implement a whole-range scanning of scrambling code phase of a WCDMA cell within GSM idle frames, thus IQ data cannot be collected in a real-time online manner, so that the IQ data may be buffered during the GSM idle frames by hardware. After the IQ data collection is completed, the hardware informs the software through interruption, and then the software configures a time slot offset and a symbol offset and starts hardware to perform multipath searching. According to the frame structure of the WCDMA system, a frame is divided into 15 time slots, each time slot corresponds to 10 symbols, each symbol corresponds to 256 chips, thereby there are $15\times10\times256$ scrambling code phases in total; these phases are equally divided into 150 segments, each segment corresponds to an initial phase, and the remaining phases are obtained by chip-by-chip recursion during the scrambling code sequence generating process. Fig. 11 illustrates a diagram of WCDMA cell searching process in GSM CAMP according to the present disclosure, illustrates a diagram of a whole-range scanning of descrambling code phase. When a GSM idle frame arrives, a upper layer informs the hardware to start buffering IQ data, and after completion of buffer, the hardware issues an interruption, and the software, after responses to the interruption, configures one of the 150 phase offsets and start multipath searching. After once multipath searching ends, the hardware informs the software of the current search result through interruption, and the software determines whether an effective multipath exists; if yes, the searching may be ended, otherwise the phase offset is further configured and the multipath searching is started; this process is repeated till an effective multipath is searched out. If no effective multipath is searched out after traversing all the 150 phase offsets, the failure of current WCDMA cell searching is informed to the upper layer.

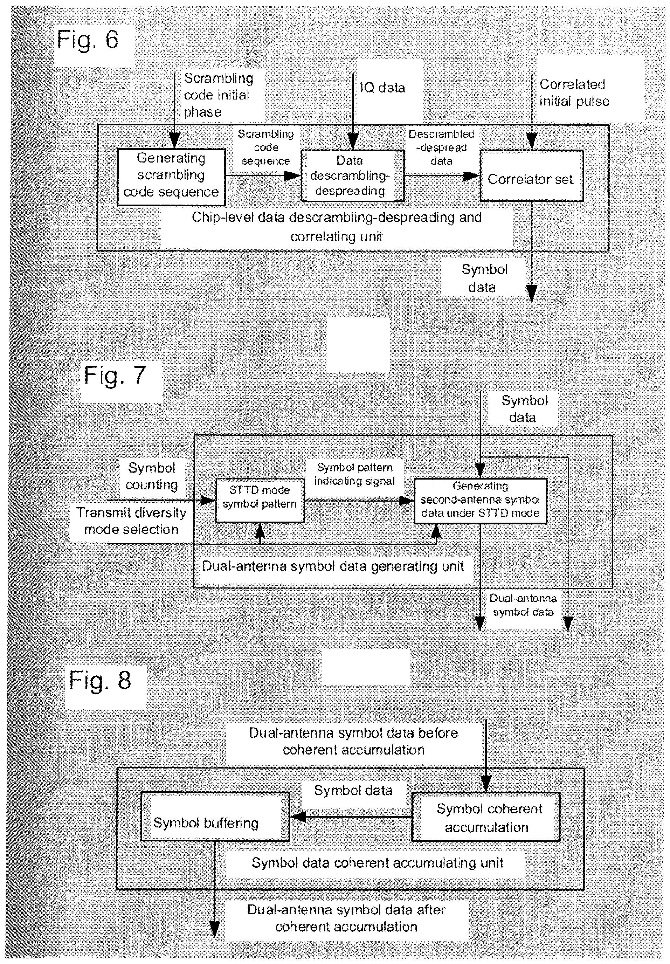

Fig. 6 shows a chip-level data descrambling-despreading and correlating unit, the unit comprises: a scrambling code sequence generating unit, a data descrambling-despreading unit and a correlator set, wherein the scrambling code initial phase, IQ data and correlated initial pulse outputted under the WCDMA mode or the GSM mode are respectively inputted into the scrambling code sequence generating unit, the data descrambling-despreading unit and the correlator set. The descrambling-despreading unit and the correlator set perform a matching filter process, and the outputted symbol is a best estimation of the symbol transmitted from the base station side based on mean square error. The scrambling code sequence generating unit calculates the scrambling code sequence by chip-to-chip recursion, and then descrambles the IQ data according to the scrambling code sequence; the descrambled data is accumulated by the correlator, and one symbol data is outputted through accumulation of IQ data of every 256 chips. For a system with a oversampling rate of 2 or 4, sample of 2 or 4 symbol data is correspondingly outputted within one symbol time.

Fig. 7 shows a dual-antenna symbol data generating unit. A system needs to acquire dual-antenna symbol data to support the STTD mode. In a WCDMA system, the pilot channel (i.e. common pilot channel, CPICH) is required to support the non-STTD and STTD mode. When the system starts multipath searching and broadcast channel (BCH) demodulation, the upper layer might not inform the current transmit diversity mode of the pilot channel, thus the physical layer is required to support detection and determination of the transmit diversity mode. If the upper layer does not inform the current transmit diversity mode, the physical layer may invoke the present apparatus to perform STTD detection so as to determine whether the current transmit diversity mode is a non-STTD mode or an STTD mode. Only if the multipath searching is performed under a correct transmit diversity mode, the performance can be guaranteed. According to the symbol pattern as shown in Fig. 1, the dual-antenna symbol data generating unit generates corresponding indication signals of the symbol pattern, and generates second-antenna symbol data based on first-antenna symbol data. If the transmit diversity mode is a non-STTD mode, disable is generated based on the STTD mode symbol pattern as shown in Fig. 1 and the second-antenna symbol data, and the first-antenna symbol data is outputted; if the transmit diversity mode is an STTD mode, enable is generated based on the STTD mode symbol pattern as shown in the figure and second-antenna symbol data, and the dual-antenna symbol data is outputted. Coherent accumulation of symbol data is introduced before calculation of symbol power. Fig. 8 shows a symbol data coherent accumulating unit, used for implementing vector accumulation of continuous symbol data within a certain time range, and the coherent accumulation of the symbol data may solve the problem in STTD detection. Fig. 12 shows a diagram of STTD detection process. Firstly, the transmit mode of the system is assumed to be the non-STTD mode, and the non-STTD mode indication is configured to the hardware by the software, and a symbol coherent accumulation work mode of the hardware is started by configuring the number of the coherently accumulated continuous symbols, wherein if the number of the coherently accumulated continuous symbols is 0, it is indicated that the hardware does not perform coherent accumulation of the symbol data, and if the number of coherently accumulated continuous symbols is 2, 4 or 8, it is indicated that the hardware performs coherent accumulation of the symbol data; the multipath power outputted after the hardware completes the multipath searching is assumed to be PA. Then the transmit mode of the system is further assumed to be the STTD mode, and the STTD mode indication is configured to the hardware by the software, and coherent accumulation of symbol is performed so as to start the multipath searching; the searched out multipath power is assumed to be PB. If PA is approximately equal to PB, it is indicated that the current transmit mode is the STTD mode; if the PA is approximately twice PB, it is indicated that the current transmit mode is the non-STTD mode. For a CPICH, a power threshold of 3dB can satisfy the requirement of the detection performance.

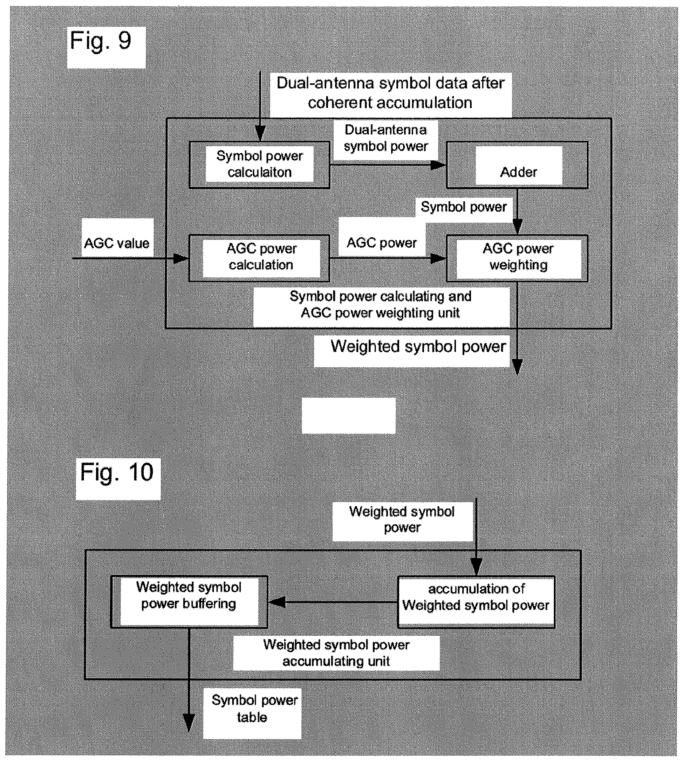

Fig. 9 shows a symbol power calculating and AGC power weighting unit. Firstly, calculation of dual-antenna symbol power is performed by using two squarers and a adder, and calculation of the AGC power is performed by using the same apparatus; then accumulation of the dual-antenna symbol power is performed based on the STTD mode indication; if it is a non-STTD mode, the second-antenna symbol power is 0; finally, the symbol power is weighted with the AGC power by using a multiplier, thus it is guaranteed that the symbol power is restricted within a specific range. In the multipath searching, it is required to accumulate power of a plurality of symbols so as to reduce the miss alarm probability of the searching, and the number of accumulated symbols is designed to be configurable by the hardware. Under the same detection performance, the time of the multipath searching, when the coherent accumulation of symbol data is started, is shorter than that when the coherent accumulation of symbol data is not started.

Fig. 10 shows a symbol power non-coherent accumulating unit. The weighted symbol power is performed non-coherent accumulation to output a symbol power table. The size of the symbol power table is determined by the width of the multipath searching window. If the width of the searching window is 128 symbols and the system oversampling rate is 2, then the symbol power table comprises 256 power values. The symbol power table is outputted to the power peak value searching unit, wherein the number of power peak values and the number of the sampling points of side-lobe suppression are designed to be configurable by the hardware. Multipath information of the current cell is outputted through the peak value searching, wherein the peak value is a reference value for the multipath symbol power; a frame border of the multipath may be calculated based on the location of the peak value in the table with reference to the correlated starting border, and the obtained frame border of the multipath is reported to the software; the border is used for RAKE combination later.

Based on the above depiction, with reference to Fig. 2, Fig. 3, Fig. 5, and Fig. 11, when the work mode is a GSM mode, the method of searching for a WCDMA cell comprises steps of:

A1. the upper layer of the system determines and informs that the work mode of the current terminal is a GSM mode, under the GSM mode, if the upper layer informs that it is necessary to search for a WCDMA cell, then when a GSM idle frame arrives, the software configures IQ data collection enable and initiates IQ data offline collection; the collected data is temporarily deposited in a buffer; after the IQ data collection of a fixed symbol number is completed, the hardware generates interruption;

A2. the software responds to the interruption and configures a scrambling code number of the current WCDMA cell, time slot offset and symbol offset, and initiates the multipath searching apparatus, performs coherent accumulation of symbol data, and calculates multipath power;

wherein steps of initiating the multipath searching under the GSM mode specifically comprise:

A21. the GSM mode scrambling code initial phase calculating and data channel unit receives the IQ data of the upper layer, scrambling code serial number, enable, time slot and symbol offset, and reads the IQ data in the buffer; the IQ data is performed the chip-level frequency offset compensation, the compensated IQ data, a scrambling code initial phase obtained through calculation by the recursive computing unit, a correlated initial pulse and other signals are sent to step A22;

A22. the chip-level data descrambling-despreading and correlating unit processes the received chip-level data, and the descrambled IQ data enters the correlator, the correlator performs coherent accumulation of the chip-level data to obtain first-antenna symbol data;

A23. the dual-antenna symbol data generating unit calculates second-antenna symbol data based on the first-antenna symbol data according to the received symbol data and symbol counting, and transmits the dual-antenna symbol data to step A24;

A24. the dual-antenna symbol data is performed coherent accumulation to obtain symbol power, and then the symbol power is subjected to the AGC weighting; and

A25. the AGC weighted symbol power is performed non-coherent accumulation to obtain a symbol power table, and multipath information and multipath power in the symbol power table is obtained through power peak value searching;

A3. it is determined that whether effective multipath exists during the multipath searching, if yes, the searching is stopped; otherwise further configuring 150 kinds of phase offsets is configured and the multipath searching is performed 150 times; and

A4. after all phase offsets are traversed, if no effective multipath is searched out, the failure of the current WCDMA cell searching is informed to the upper layer.

With reference to Fig. 2, Fig. 3, and Fig. 4, the method of performing WCDMA cell searching under the WCDMA mode according to the present disclosure comprises steps of:

B1. under the WCDMA mode, the WCDMA mode scrambling code initial phase calculating and data channel unit online collects the IQ data based on Mrtr (Mobile Radio Transmit and Receive) counting and scrambling code serial number and starting border configured by software;

B2. the IQ data is performed chip-level frequency offset compensation, and the compensated IQ data, a scrambling code initial phase obtained through calculation by the recursive computing unit, a correlated initial pulse and other signals are sent to step B3;

B3. the chip-level data descrambling-despreading and correlating unit processes the received chip-level data, and the descrambled IQ data enters the correlator, the correlator performs coherent accumulation of the chip-level data to obtain first-antenna symbol data;

B4. the dual-antenna symbol data generating unit calculates second-antenna symbol data based on the first-antenna symbol data according to the received symbol data and symbol counting, and transmits the dual-antenna symbol data to step B5;

B5. the dual-antenna symbol data is performed coherent accumulation to obtain symbol power, and then the symbol power is subjected to the AGC weighting; and

B6. the AGC weighted symbol power is performed non-coherent accumulation to obtain a symbol power table, and multipath information in the symbol power table is obtained through power peak value searching, and finally the obtained multipath power and multipath location are reported to the software.

The multipath searching apparatus according to the present disclosure under the WCDMA mode performs coherent accumulation of the symbol data, obtains two multipath power values through twice multipath searching, and determines the relationship between the two power values to realize the STTD mode detection. As shown in Fig. 11, the detection process comprises the following steps:

C1. software sets the transmit diversity mode to be a non-STTD mode, and configures performing coherent accumulation of first-antenna symbol data;

C2. multipath searching apparatus starts the multipath searching, and outputs a first multipath power PA after implementing the multipath searching;

C3. the software further sets the transmit diversity mode to be an STTD mode, and configures performing coherent accumulation of dual-antenna symbol data;

C4. the multipath searching apparatus starts the multipath searching again, and outputs a second multipath power PB after implementing the multipath searching; and

C5. Based on the first multipath power PA and the second multipath power PB, it is determined that whether the first multipath power PA and the second multipath power PB are approximately equal; if yes, it is indicated that the transmit mode is the STTD mode, and if the first multipath power PA is approximately twice the second multipath power PB, then it is indicated that the transmit mode is the non-STTD mode.

It can be seen from the above description that: when the upper layer of the system according to the present disclosure informs GSM CAMP, generally the upper layer cannot know the frame border of the current cell, thus it is apparently inappropriate to start once initial cell searching; however, generally the upper layer knows the scrambling code information and the transmit diversity mode of the current cell, thus the hardware may scan all scrambling code phases within one frame according to the scrambling code index to perform the multipath searching and determine whether the WCDMA cell as informed by the upper layer exists; if yes, then the cell searching and measurement is completed for one time. Under the GSM mode, traversal of the scrambling code initial phase may be implemented through traversing the time slot offsets and symbol offsets to complete the WCDMA cell searching in GSM CAMP.

The WCDMA mode and GSM mode cannot be effective simultaneously, thus in the present disclosure, the recursive computing unit for calculating the scrambling code initial unit and the frequency offset compensating unit as comprised in the WCDMA mode scrambling code initial phase calculating and data channel unit are identical to the recursive computing unit for calculating the scrambling code initial unit and the frequency offset compensating unit as comprised in the GSM mode scrambling code initial phase configuring and data channel unit, therefore the recursive computing unit and the offset frequency compensating unit may be shared by the two modes, or the recursive computing unit and the frequency offset compensating unit may be separately configured for the two modes. Further, the buffer volume for the IQ data is relatively great under the offline mode, but in GSM CAMP, the WCDMA system is in a non-working state, thus the buffer volume may be shared with other RAM (random access memory) resources in the WCDMA hardware system. Through the sharing design, overheads of the hardware supporting the two work modes increases relatively little, and the increased amount may be neglected compared with the complex WCDMA physical layer design.

Through the scrambling code initial phase calculating and IQ data channel unit of the present disclosure, the signals outputted under one of the two modes is selected and is inputted to the chip-level data descrambling-despreading and correlating unit. The current work mode of the terminal is informed by the upper layer, and corresponding data and control information is selected based on the mode. It is unnecessary to despread the CPICH, and the scrambling code sequence required for descrambling is obtained by performing recursion beginning from the scrambling code initial phase according to a generator polynomial, and each chip outputs a 1-bit scrambling code. The descrambled IQ data enters into the correlator, the correlator performs coherent accumulation of the chip-level data, and symbol data is obtained after coherent accumulation of the 256 chip data. In consideration of the STTD mode, it is necessary to calculate the second-antenna symbol data based on the first-antenna symbol data according to the relationship between the symbol patterns of the two transmit antennae. This function is realized by the dual-antenna symbol data generating unit.

If the phase error introduced by drift of the system clock is compensated, for a mobile communication system, Doppler frequency shift is a main factor causing phase offset between symbols. Because of the chip rate of 3.84M of the WCDMA system, the phase offset between several adjacent symbols may be as little as neglectable, which is a premise for coherent accumulation of the symbol data. Based on algorithm simulation, the apparatus according to the present disclosure is designed to support coherent accumulation of 2, 4 and 8 adjacent symbol data and also support a bypass mode of the symbol coherent accumulation (i.e., not performing coherent accumulation of the symbol data). In consideration of the symbol pattern of the STTD (Space Time Transmit Diversity) mode, the symbol number of coherent accumulation is designed to be an integral multiple of 2. For a typical radio channel, when the symbol number participated in the accumulation is constant, coherent accumulation between symbols with little phase offset is more advantageous to improve signal noise ratio of the system than non-coherent accumulation between symbols. In other words, introduction of symbol coherent accumulation may improve efficiency and real-time performance of the multipath searching.

Further, symbol coherent accumulation may solve the problem in STTD detection, and avoid demodulation of SCH by hardware. The symbol data coherent accumulating unit outputs the dual-antenna symbol data to the symbol power calculating and AGC power weighting unit which performs calculation of the symbol power, accumulation of dual-antenna symbol power, AGC power calculation and AGC power weighting. In order to reduce algorithm error of the signal power, floating-point power may be adopted during the design.

The weighted symbol power is subjected to non-coherent accumulation by the symbol power accumulating unit, and a symbol power table required for the multipath searching is outputted. Generally, the size of symbol power table may be designed to be 256 symbols. The number of weighted symbol power subjected to non-coherent accumulation may be more or less; if the channel quality is good, a higher signal noise ratio may also be obtained by energy accumulation within a relatively small range; if the channel quality is poor, an appropriate signal noise ratio may be obtained by energy accumulation for quite a long time. In actual application, the number of accumulated symbols should be designed to be adjustable.

The symbol power table comprises multipath information and noise information. The power peak value searching unit performs multipath information searching in the symbol power table. Since the symbol power table is relatively small, a simple circulated searching algorithm may be adopted. Assuming that the upper layer requires the hardware to search out multipath of two, a maximum peak value is firstly searched out in the symbol power table, and then the peak value in the symbol power table is shielded and a second peak value is searched out from the remaining symbol power. The two peak values correspond to multipath of two, the magnitude of the peak values correspond to multipath power, and a multipath border may be obtained by conversion of the location of the peak values in the table. It should be noted that a twice or four times oversampling rate is usually adopted by the WCDMA system, and thus the symbol power table with 256 symbols is expanded into a symbol power table with 512 or 1024 symbols. In design of the peak value searching unit, it is required to shield off peak value sidelobes within a certain sampling width range around the peak value, otherwise, false multipath will be searched out, which raises the false alarm probability of the system.

It should be noted that the above embodiments are only for illustrating the technical solutions of the present disclosure, not intended to limit the present disclosure.

## Industrial Applicability

The present disclosure provides a multipath searching apparatus and method supporting transmit diversity mode detection. This apparatus supports the GSM/WCDMA dual-mode cell searching, improves the multipath searching performance through coherent accumulation of symbols, and realizes STTD detection. Therefore, by virtue of the multipath searching apparatus, measurement of the received signal code power (RSCP) may be conveniently implemented, the multipath border may be searched out quickly and precisely, and reliable synchronization may be provided for the RAKE receiver, thereby high-performance reception of signals is achieved.

## Claims

1. A multipath searching apparatus supporting transmit diversity mode detection, applied to a GSM/WCDMA dual-mode system comprising a base station BS having a first antenna and a second antenna, the transmit diversity mode being a space time transmit diversity STTD mode or a non-STTD mode, the multipath searching apparatus comprising:

   a WCDMA mode scrambling code initial phase calculating and data channel unit, a GSM mode scrambling code initial phase configuring and data channel unit and a chip-level processing and multipath searching unit; wherein
   the WCDMA mode scrambling code initial phase calculating and data channel unit is configured to perform online collection of IQ data, to implement scrambling code initial phase calculation, to determine an IQ data channel, and to output a signal to the chip-level processing and multipath searching unit;
   the GSM mode scrambling code initial phase configuring and data channel unit is configured to perform offline collection of IQ data, to implement scrambling code initial phase calculation, to determine an IQ data channel, and to output a signal to the chip-level processing and multipath searching unit; **characterized in that**
   the chip-level processing and multipath searching unit is configured to receive the signal outputted from the WCDMA mode scrambling code initial phase calculating and data channel unit or the signal outputted from the GSM mode scrambling code initial phase configuring and data channel unit, to perform chip-level data processing of the received signal to obtain symbol data of the first antenna or the second antenna, to perform coherent accumulation of the symbol data of the first antenna and the second antenna, to calculate multipath power, and to perform multipath searching;
   wherein the chip-level processing and multipath searching unit comprises a chip-level data descrambling-despreading and correlating unit, a antenna symbol data generating unit, a symbol data coherent accumulating unit, a symbol power calculating and automatic gain control power weighting unit, a symbol power accumulating unit and a peak value searching unit, wherein the chip-level data descrambling-despreading and correlating unit is configured to receive the signal outputted from the WCDMA mode scrambling code initial phase calculating and data channel unit or the signal outputted from the GSM mode scrambling code initial phase configuring and data channel unit, to descramble the IQ data in the outputted signal, and to perform coherent accumulation of the descrambled IQ data to obtain symbol data of the first antenna; the antenna symbol data generating unit is configured to calculate symbol data of the second antenna based on the symbol data of the first antenna, and to output the symbol data of the first antenna and the second antenna to the symbol data coherent accumulating unit; the symbol data coherent accumulating unit is configured to perform coherent accumulation of the received the symbol data of the first antenna and the second antenna, and to output the symbol data of the first antenna and the second antenna after the coherent accumulation to the symbol power calculating and automatic gain control power weighting unit; the symbol power calculating and automatic gain control power weighting unit is configured to calculate symbol power based on the received the symbol data of the first antenna and the second antenna after coherent accumulation, to perform automatic gain control weighting of the calculated symbol power, and then to output the weighted symbol power to the symbol power accumulating unit; the symbol power accumulating unit is configured to perform non-coherent accumulation of the symbol power after automatic gain control weighting to obtain a symbol power table for multipath searching, and to output the symbol power table to the power peak value searching unit; and the power peak value searching unit is configured to implement multipath information searching in the symbol power table to obtain multipath information comprising multipath power and multipath border, and to report the obtained multipath power and multipath border to system software;

wherein the multipath searching apparatus is further configured to calculate a multipath power PA assuming a non-STTD mode, to calculate a multipath power PB assuming a STTD-mode, to detect STTD mode if PA is approximately equal to PB and to detect non-STTD mode if PA is approximately twice PB.

2. The apparatus according to claim 1, wherein both the signal outputted from the WCDMA mode scrambling code initial phase calculating and data channel unit and the signal outputted from the GSM mode scrambling code initial phase configuring and data channel unit comprise scrambling code initial phase, correlated initial pulse, and IQ data.

3. The apparatus according to claim 1, further comprising a shared recursion computing unit and a frequency offset compensating unit; wherein the recursion computing unit is configured to calculate scrambling code initial phase, the frequency offset compensating unit is configured to compensate the collected IQ data;
wherein the WCDMA mode scrambling code initial phase calculating and data channel unit and the GSM mode scrambling code initial phase configuring and data channel unit share the recursion computing unit and the frequency offset compensating unit; or the WCDMA mode scrambling code initial phase calculating and data channel unit and the GSM mode scrambling code initial phase configuring and data channel unit are configured with their respective recursion computing unit and frequency offset compensating unit.

4. A multipath searching method, applied to a GSM/WCDMA dual-mode system comprising a base station BS having a first antenna and a second antenna, wherein the base station is configured to transmit signals in either a space time transmit diversity STTD mode or a non-STTD mode, the multipath searching method comprising:

   determining and informing a current work mode of a terminal by upper layer of a system; and performing WCDMA cell searching according to the current work mode of the terminal, **characterized in that** when the current work mode of the terminal is a GSM mode, the step of performing WCDMA cell searching according to the current work mode of the terminal comprises: when a GSM idle frame arrives, a GSM mode scrambling code initial phase configuring and data channel unit initiates IQ data collection and stores the collected IQ data in a buffer; when the storage ends, processing the IQ data to obtain symbol data;
   configuring time slot offset and symbol offset; performing coherent accumulation of the symbol data;
calculating multipath power; and
initiating multipath searching;
wherein when initiating IQ data collection, the method further comprising: receiving IQ data of the upper layer, scrambling code serial number, enable signal, time slot offset signal and symbol offset signal;
after the storage ends and before the step of processing the IQ data, the method further comprising: offline collecting the IQ data, performing chip-level frequency offset compensation, and sending the compensated IQ data, scrambling code initial phase obtained through calculation by a recursion computing unit and correlated initial pulse signal to a chip-level processing and multipath searching unit as output signals;
the step of processing the IQ data comprises: the chip-level processing and multipath searching unit performs chip-level data processing of the received outputted signals to obtain symbol data of the first antenna and the second antenna ;
wherein the step of performing chip-level data processing comprises:

   descrambling the IQ data; performing coherent accumulation of the descrambled IQ data to obtain symbol data of the first antenna; and
   calculating symbol data of the second antenna according to the symbol data of the first antenna;

the step of performing coherent accumulation of the symbol data refers to performing coherent accumulation of the symbol data of the first antenna and the second antenna;
the step of calculating multipath power comprises:

   calculating symbol power according to result of performing coherent accumulation of the symbol data of the first antenna and the second antenna , and performing automatic gain control weighting of the symbol power; and
   performing non-coherent accumulation of the symbol power after the automatic gain control weighting to obtain a symbol power table, obtaining multipath information in the symbol power table through power peak value searching, and finally obtaining the multipath power, wherein the obtained multipath power and multipath location are reported to software to initiate multipath searching;

the method further comprising the steps of:

calculating a multipath power PA assuming a non-STTD mode,
calculating a multipath power PB assuming a STTD-mode,
detecting STTD mode if PA is approximately equal to PB and detecting non-STTD mode if PA is approximately twice PB.

5. The method according to claim 4, wherein further comprising:

determining whether an effective multipath exists in the multipath searching; if yes, stopping searching, otherwise continuing configuration of a plurality of phase offsets and initiating multipath searching;
after traversing all phase offsets, if no effective multipath is searched out, failure of current WCDMA cell searching being informed to the upper layer of the system.

6. The method according to claim 4, wherein the step of obtaining scrambling code initial phase through calculation by the recursion computing unit comprises:
according to the obtained scrambling code serial number, the time slot offset and the symbol offset, obtaining the scrambling code initial phase through chip-by-chip recursion by the recursion computing unit during scrambling code sequence generating process.

7. A multipath searching method, applied to a GSM/WCDMA dual-mode system comprising a base station BS having a first antenna and a second antenna, wherein the base station is configured to transmit signals in either a space time transmit diversity STTD mode or a non-STTD mode, the multipath searching method comprising:

determining and informing a current work mode of a terminal by upper layer of a system; and
performing WCDMA cell searching according to the current work mode of the terminal,
**characterized in that** when the current work mode of the terminal is a WCDMA mode, the step of performing WCDMA cell searching according to the current work mode of the terminal comprises:

a WCDMA mode scrambling code initial phase calculating and data channel unit receiving IQ data of the upper layer, scrambling code serial number, starting border, and Mrtr (Mobile Radio Transmit and Receive) counting;

online collecting the IQ data, performing chip-level frequency offset compensation, sending the compensated IQ data, scrambling code initial phase obtained through calculation by a recursion computing unit and correlated initial pulse signal to a chip-level processing and multipath searching unit as output signals; and
the chip-level processing and multipath searching unit performs chip-level data processing of the received output signals to obtain symbol data of the first antenna and the second antenna, performs coherent accumulation of the symbol data of the first antenna and the second antenna,, calculates multipath power, and performs multipath searching;

wherein the step of performing chip-level data processing comprises:

descrambling the IQ data; performing coherent accumulation of the descrambled IQ data to obtain symbol data of the first antenna; and
calculating symbol data of the second antenna according to the symbol data of the first antenna;

the step of performing coherent accumulation of symbol data refers to performing coherent accumulation of the symbol data of the first antenna and the second antenna;
the step of calculating multipath power comprises:

calculating symbol power according to result of performing coherent accumulation of the dual-antenna symbol data, and performing automatic gain control weighting of the symbol power; and
performing non-coherent accumulation of the symbol power after the automatic gain control weighting to obtain a symbol power table, and obtaining multipath information in the symbol power table through power peak value searching, and finally obtaining the multipath power, wherein the obtained multipath power and multipath location are reported to software to initiate multipath searching;

the method further comprising the steps of: calculating a multipath power PA assuming a non-STTD mode, calculating a multipath power PB assuming a STTD-mode, detecting STTD mode if PA is approximately equal to PB and detecting non-STTD mode if PA is approximately twice PB.

**Patentansprüche**

1. Eine Multipad-Suchvorrichtung, die Sende-Diversitätsmodus-Erfassung unterstützt, angewandt auf ein GSM/WCDMA Dual-Modus-System, das eine Basisstation BS mit einer ersten Antenne und einer zweiten Antenne umfasst, wobei der Sende-Diversitätsmodus ein Raum-Zeit-Sende-Diversitäts-STTD-Modus (STTD - Space Time Transmit Diversity) oder ein Nicht-STTD-Modus ist, wobei die Multipad-Suchvorrichtung Folgendes umfasst:

   eine WCDMA-Modus-Verschlüsselungscode-Anfangsphasenberechnungs- und-Datenkanaleinheit, eine GSM-Modus-Verschlüsselungscode-Anfangsphasenkonfigurations- und -Datenkanaleinheit und eine Chip-Level-Verarbeitungs- und -Multipad-Sucheinheit; wobei die WCDMA-Modus-Verschlüsselungscode-Anfangsphasenberechnungs- und-Datenkanaleinheit dazu ausgestaltet ist, eine Online-Sammlung von IQ-Daten durchzuführen, eine Verschlüsselungscode-Anfangsphasenberechnung zu implementieren, einen IQ-Datenkanal zu bestimmen und ein Signal an die Chip-Level-Verarbeitungs- und-Multipad-Sucheinheit auszugeben; die GSM-Modus-Verschlüsselungscode-Anfangsphasenkonfigurations- und-Datenkanaleinheit dazu ausgestaltet ist, eine Offline-Sammlung von IQ-Daten durchzuführen, eine Verschlüsselungscode-Anfangsphasenberechnung zu implementieren, einen IQ-Datenkanal zu bestimmen und ein Signal an die Chip-Level-Verarbeitungs- und-Multipad-Sucheinheit auszugeben; **dadurch gekennzeichnet, dass** die Chip-Level-Verarbeitungs- und -Multipad-Sucheinheit dazu ausgestaltet ist, das von der WCDMA-Modus-Verschlüsselungscode-Anfangsphasenberechnungs- und-Datenkanaleinheit ausgegebene Signal oder das von der GSM-Modus-Verschlüsselungscode-Anfangsphasenkonfigurations- und -Datenkanaleinheit ausgegebene Signal zu empfangen, die Chip-Level-Datenverarbeitung des empfangenen Signals auszuführen, um Symboldaten der ersten Antenne oder der zweiten Antenne zu erhalten, kohärente Akkumulation der Symboldaten der ersten Antenne und der zweiten Antenne auszuführen, die Multipadleistung zu berechnen und die Multipadsuche auszuführen; wobei die Chip-Level-Verarbeitungs- und -Multipad-Sucheinheit eine Chip-Level-Datenentschlüsselungs-Entspreizungs- und Korrelationseinheit, eine Antennensymboldaten-Erzeugungseinheit, eine Symboldaten-kohärente Akkumulationseinheit, eine Symbolleistungsberechnungs- und automatische Verstärkungssteuerungs-Leistungsgewichtungseinheit, eine Symbolleistungsakkumulationseinheit und eine Spitzenwertsucheinheit umfasst, wobei die Chip-Level-Datenentschlüsselungs-Entspreizungs- und Korrelationseinheit dazu ausgestaltet ist, das von der WCDMA-Modus-Verschlüsselungscode-Anfangsphasenberechnungs- und -Datenkanaleinheit ausgegebene Signal oder das von der GSM-Modus-Verschlüsselungscode-Anfangsphasenkonfigurations- und - Datenkanaleinheit ausgegebene Signal zu empfangen, die IQ-Daten in dem ausgegebenen Signal zu entschlüsseln und kohärente Akkumulation der entschlüsselten IQ-Daten auszuführen, um Symboldaten der ersten Antenne zu erhalten; die Antennensymboldaten-Erzeugungseinheit dazu ausgestaltet ist, Symboldaten der zweiten Antenne basierend auf den Symboldaten der ersten Antenne zu berechnen und die Symboldaten der ersten Antenne und der zweiten Antenne an die Symboldaten-kohärente Akkumulationseinheit auszugeben; die Symboldaten-kohärente Akkumulationseinheit dazu ausgestaltet ist, eine kohärente Akkumulation der empfangenen Symboldaten der ersten Antenne und der zweiten Antenne durchzuführen und die Symboldaten der ersten Antenne und der zweiten Antenne nach der kohärenten Akkumulation an die Symbolleistungsberechnung und an eine automatische Verstärkungssteuerungs-Leistungsgewichtseinheit auszugeben; die Symbolleistungsberechnungs- und automatische Verstärkungssteuerungs-Leistungsgewichtungseinheit dazu ausgestaltet ist, die Symbolleistung basierend auf den empfangenen Symboldaten der ersten Antenne und der zweiten Antenne nach kohärenter Akkumulation zu berechnen, eine automatische Verstärkungssteuerungsgewichtung der berechneten Symbolleistung auszuführen, und dann die gewichtete Symbolleistung an die Symbolleistungsakkumulationseinheit auszugeben; die Symbolleistungsakkumulationseinheit dazu ausgestaltet ist, eine nichtkohärente Akkumulation der Symbolleistung nach der automatischen Verstärkungssteuerungsgewichtung auszuführen, um eine Symbolleistungstabelle für die Multipadsuche zu erhalten, und um die Symbolleistungstabelle an die Leistungsspitzenwert-Sucheinheit auszugeben; und die Leistungsspitzenwert-Sucheinheit dazu ausgestaltet ist, dass sie eine Multipad-Informationssuche in der Symbolleistungstabelle implementiert, um Multipadinformationen, die eine Multipadleistung und eine Multipadgrenze

umfassen, zu erhalten, und um die erhaltene Multipfadleistung und die Multipfadgrenze an die Systemsoftware zu melden;

wobei die Multipfad-Suchvorrichtung ferner dazu ausgestaltet ist, eine Multipfadleistung PA unter Annahme eines Nicht-STTD-Modus zu berechnen, eine Multipfadleistung PB unter Annahme eines STTD-Modus zu berechnen, den STTD-Modus zu ermitteln, wenn PA etwa gleich PB ist, und den Nicht-STTD-Modus zu ermitteln, wenn PA etwa zweimal PB ist.

2. Vorrichtung nach Anspruch 1, wobei sowohl das von der WCDMA-Modus-Verschlüsselungscode-Anfangsphasenberechnungs- und -Datenkanaleinheit ausgegebene Signal und das von der GSM-Modus-Verschlüsselungscode-Anfangsphasenkonfigurations- und -Datenkanaleinheit ausgegebene Signal die Verschlüsselungscode-Anfangsphase, den korrelierten Anfangsimpuls und die IQ-Daten umfasst.

3. Vorrichtung nach Anspruch 1, die ferner eine Berechnungseinheit einer gemeinsamen Rekursion und eine Frequenzversatz-Kompensationseinheit umfasst;

wobei die Rekursionsberechnungseinheit dazu ausgestaltet ist, die Verschlüsselungscode-Anfangsphase zu berechnen, wobei die Frequenzversatz-Kompensationseinheit dazu ausgestaltet ist, die gesammelten IQ-Daten zu kompensieren;

wobei die WCDMA-Modus-Verschlüsselungscode-Anfangsphasenberechnungs- und -Datenkanaleinheit und die GSM-Modus-Verschlüsselungscode-Anfangsphasenkonfigurations- und -Datenkanaleinheit die Rekursionsberechnungseinheit und die Frequenzversatz-Kompensationseinheit teilen; oder

die WCDMA-Modus-Verschlüsselungscode-Anfangsphasenberechnungs- und -Datenkanaleinheit und die GSM-Modus-Verschlüsselungscode-AnfangsphasenKonfigurations- und -Datenkanaleinheit mit ihrer jeweiligen Rekursionsberechnungseinheit und Frequenzversatz-Kompensationseinheit ausgestaltet sind.

4. Multipfadsuchverfahren, das auf ein GSM/WCDMA-Dualmodus-System angewendet wird, das eine Basisstation BS mit einer ersten Antenne und einer zweiten Antenne umfasst, wobei die Basisstation dazu ausgestaltet ist, Signale entweder in einem Raum-Zeit-Sende-Diversitäts-STTD-Modus oder in einem -Nicht-STTD-Modus zu senden, wobei das Multipfadsuchverfahren Folgendes umfasst:

Bestimmen und Informieren eines aktuellen Arbeitsmodus eines Terminals durch die obere Schicht eines Systems; und
Ausführen einer WCDMA-Zellensuche gemäß dem aktuellen Arbeitsmodus des Terminals, **dadurch gekennzeichnet, dass**, wenn der aktuelle Arbeitsmodus des Terminals ein GSM-Modus ist, der Schritt des Ausführens der WCDMA-Zellensuche gemäß dem aktuellen Arbeitsmodus des Terminals Folgendes umfasst:

wenn ein GSM-Leerlaufrahmen eintrifft, initiiert eine GSM-Modus-Verschlüsselungscode-Anfangsphasenkonfigurations- und -Datenkanaleinheit die IQ-Datensammlung und speichert die gesammelten IQ-Daten in einem Puffer;
wenn die Speicherung endet, Verarbeiten der IQ-Daten, um Symboldaten zu erhalten;
Konfigurieren von Zeitfensterversatz und Symbolversatz;
Ausführen einer kohärenten Akkumulation der Symboldaten;
Berechnen der Multipfadleistung; und
Initiieren der Multipfadsuche;

wobei beim Initiieren der IQ-Datenerfassung das Verfahren ferner Folgendes umfasst:

Empfangen von IQ-Daten der oberen Schicht, Verschlüsselungscode-Seriennummer, Freigabesignal, Zeitfensterversatzsignal und Symbolversatzsignal;
nach Ende der Speicherung und vor dem Schritt des Verarbeitens der IQ-Daten umfasst das Verfahren ferner Folgendes:
Offline-Sammeln der IQ-Daten, Durchführen einer Chip-Level-Frequenzversatzkompensation und Senden der kompensierten IQ-Daten, wobei eine Verschlüsselungscode-Anfangsphase durch eine Berechnung durch eine Rekursionsberechnungseinheit und ein korreliertes anfängliches Impulssignal an eine Chip-Level-Verarbeitungs- und -Multipfad-Sucheinheit als Ausgangssignale erhalten wurde;

wobei der Schritt des Verarbeitens der IQ-Daten Folgendes umfasst:
die Chip-Level-Verarbeitungs- und -Multipfad-Sucheinheit führt eine Chip-Level-Datenverarbeitung der empfangenen ausgegebenen Signale aus, um Symboldaten der ersten Antenne und der zweiten Antenne zu erhalten;
wobei der Schritt des Ausführens der Chip-Level-Datenverarbeitung Folgendes umfasst:

Entschlüsseln der IQ-Daten;
Ausführen einer kohärenten Akkumulation der entschlüsselten IQ-Daten, um Symboldaten der ersten Antenne zu erhalten; und Berechnen von Symboldaten der zweiten Antenne gemäß den Symboldaten der ersten Antenne;

der Schritt des Ausführens der kohärenten Akkumulation der Symboldaten bezieht sich auf das Ausführen der kohärenten Akkumulation der Symboldaten der ersten Antenne und der zweiten Antenne;
wobei der Schritt der Berechnung der Multipfadleistung Folgendes umfasst:

Berechnen der Symbolleistung gemäß dem Ergebnis der Ausführung einer kohärenten Akkumulation der Symboldaten der ersten Antenne und der zweiten Antenne und Ausführen einer automatischen Verstärkungssteuerungsgewichtung der Symbolleistung; und
Ausführen einer nicht kohärenten Akkumulation der Symbolleistung nach der automatischen Verstärkungssteuerungsgewichtung, um eine Symbolleistungstabelle zu erhalten, Erhalten von Multipfadinformationen in der Symbolleistungstabelle durch Suchen nach einem Leistungsspitzenwert und schließlich Erhalten der Multipfadleistung, wobei die erhaltene Multipfadleistung und der Multipfadstandort an die Software gemeldet werden, um die Multipfadsuche zu initiieren;

wobei das Verfahren ferner die folgenden Schritte umfasst:
Berechnen einer Multipfadleistung PA unter der Annahme eines Nicht-STTD-Modus, Berechnen einer Multipfadleistung PB unter der Annahme eines STTD-Modus, Erfassen des STTD-Modus, wenn PA etwa gleich PB ist, und Erfassen des Nicht-STTD-Modus, wenn PA etwa zweimal PB ist.

5. Verfahren nach Anspruch 4, das ferner Folgendes umfasst:

Bestimmen, ob ein wirksamer Multipfad bei der Multipfadsuche existiert;
wenn ja, Anhalten der Suche, andernfalls Fortsetzen der Konfiguration mehrerer Phasenversätze und Initiieren der Multipfadsuche;
wenn nach Durchlaufen aller Phasenversätze kein effektiver Multipfad ausgesucht wird, wird der Fehler der aktuellen WCDMA-Zellensuche an die obere Schicht des Systems gemeldet.

6. Verfahren nach Anspruch 4, wobei der Schritt des Erhaltens der Verschlüsselungscode-Anfangsphase durch Berechnen durch die Rekursionsberechnungseinheit Folgendes umfasst:
gemäß der erhaltenen Verschlüsselungscode-Seriennummer, dem Zeitfensterversatz und dem Symbolversatz, Erhalten der Verschlüsselungscode-Anfangsphase durch Chipfür-Chip-Rekursion durch die Rekursionsberechnungseinheit während des Verschlüsselungscode-Sequenzerzeugungsprozesses.

7. Multipfadsuchverfahren, angewendet auf ein GSM/WCDMA-Dualmodus-System, das eine Basisstation BS mit einer ersten Antenne und einer zweiten Antenne umfasst, wobei die Basisstation dazu ausgestaltet ist, Signale entweder in einem Raum-Zeit-Sende-Diversitäts-STTD-Modus oder in einem Nicht-STTD-Modus zu senden, wobei das Multipfadsuchverfahren Folgendes umfasst:

Bestimmen und Informieren eines aktuellen Arbeitsmodus eines Terminals durch die obere Schicht eines Systems; und
Ausführen einer WCDMA-Zellensuche gemäß dem aktuellen Arbeitsmodus des Terminals, **dadurch gekennzeichnet, dass**, wenn der aktuelle Arbeitsmodus des Terminals ein WCDMA-Modus ist, der Schritt des Ausführens einer WCDMA-Zellensuche gemäß dem aktuellen Arbeitsmodus des Terminals Folgendes umfasst:

eine WCDMA-Modus-Verschlüsselungscode-Anfangsphasenberechnungs- und -Datenkanaleinheit, die IQ-Daten der oberen Schicht, die Verschlüsselungscode-Seriennummer, die Startgrenze und die MRTR-Zählung (MRTR - Mobile Radio Transmit and Receive) empfängt;
Online-Sammeln der IQ-Daten, Durchführen einer Chip-Level-Frequenzversatzkompensation, Senden der kompensierten IQ-Daten, wobei eine Verschlüsselungscode-Anfangsphase durch Berechnung durch eine Rekursionsberechnungseinheit und korreliertes Anfangsimpulssignal an eine Chip-Level-Verarbeitungs- und -Multipfad-Sucheinheit als Ausgangssignale erhalten wurde; und
die Chip-Level-Verarbeitungs- und -Multipfad-Sucheinheit führt eine Chip-Level-Datenverarbeitung der empfangenen Ausgangssignale aus, um Symboldaten der ersten Antenne und der zweiten Antenne zu erhalten, führt eine kohärente Akkumulation der Symboldaten der ersten Antenne und der zweiten Antenne durch, berechnet die Multipfadleistung und führt eine Multipfadsuche aus;

wobei der Schritt des Ausführens der Chip-Level-Datenverarbeitung Folgendes umfasst:

Entschlüsseln der IQ-Daten; Ausführen einer kohärenten Akkumulation der entschlüsselten IQ-Daten, um Symboldaten der ersten Antenne zu erhalten; und Berechnen von Symboldaten der zweiten Antenne gemäß den Symboldaten der ersten Antenne;

der Schritt des Ausführens der kohärenten Akkumulation der Symboldaten bezieht sich auf das Ausführen der kohärenten Akkumulation der Symboldaten der ersten Antenne und der zweiten Antenne;
wobei der Schritt der Berechnung der Multipfadleistung Folgendes umfasst:

Berechnen der Symbolleistung gemäß dem Ergebnis der Ausführung einer kohärenten Akkumulation der Dualantennen-Symboldaten und Ausführen einer automatischen Verstärkungssteuerungsgewichtung der Symbolleistung; und Ausführen einer nicht kohärenten Akkumulation der Symbolleistung nach der automatischen Verstärkungssteuerungsgewichtung, um eine Symbolleistungstabelle zu erhalten, und Erhalten von Multipfadinformationen in der Symbolleistungstabelle durch Suchen nach einem Leistungsspitzenwert, und schließlich Erhalten der Multipfadleistung, wobei die erhaltene Multipfadleistung und der Multipfadstandort an die Software gemeldet werden, um die Multipfadsuche zu initiieren;

wobei das Verfahren ferner die folgenden Schritte umfasst:
Berechnen einer Multipfadleistung PA unter der Annahme eines Nicht-STTD-Modus, Berechnen einer Multipfadleistung PB unter der Annahme eines STTD-Modus, Erfassen des STTD-Modus, wenn PA etwa gleich PB ist, und Erfassen des Nicht-STTD-Modus, wenn PA etwa zweimal PB ist.

**Revendications**

1. Appareil de recherche par trajets multiples prenant en charge la détection en mode de diversité de transmission, appliquée à un système bimode GSM/WCDMA comprenant une station de base BS présentant une première antenne et une seconde antenne, le mode de diversité de transmission étant un mode de diversité de transmission espace-temps STTD ou un mode non STTD, l'appareil de recherche par trajets multiples comprenant :

une unité de canal de données et de calcul de phase initiale de code de brouillage en mode WCDMA, une unité de canal de données et de configuration de phase initiale de code de brouillage en mode GSM et une unité de traitement et de recherche par trajets multiples au niveau de la puce ; dans lequel
l'unité de canal de données et de calcul de phase initiale de code de brouillage en mode WCDMA est configurée pour réaliser une collecte en ligne de données IQ, pour mettre en oeuvre le calcul de phase initiale de code de brouillage, pour déterminer un canal de données IQ et pour émettre en sortie un signal à l'unité de traitement et de recherche par trajets multiples au niveau de la puce ;
l'unité de canal de données et de configuration de phase initiale de code de brouillage en mode GSM est configurée pour réaliser une collecte hors ligne de données IQ, pour mettre en oeuvre le calcul de phase initiale de code de brouillage, pour déterminer un canal de données IQ et pour émettre en sortie un signal à l'unité de traitement et de recherche par trajets multiples au niveau de la puce ; **caractérisée en ce que**
l'unité de traitement et de recherche par trajets multiples au niveau de la puce est configurée pour recevoir le signal émis en sortie à partir de l'unité de canal de données et de calcul de phase initiale de code de brouillage en mode WCDMA ou le signal émis en sortie à partir de l'unité de canal de données et de configuration de phase initiale de code de brouillage en mode GSM et pour réaliser le traitement de données au niveau de la puce du signal reçu pour obtenir des données de symbole de la première antenne ou de la seconde antenne, pour réaliser une accumulation cohérente des données de symbole de la première antenne et de la seconde antenne, pour calculer la puissance par trajets multiples et pour réaliser une recherche par trajets multiples ;
dans lequel l'unité de traitement et de recherche par trajets multiples au niveau de la puce comprend une unité de désembrouillage-désétalement et de corrélation de données au niveau de la puce, une unité de génération de données de symbole d'antenne, une unité d'accumulation cohérente des données de symbole, une unité de calcul de la puissance de symbole et de pondération de la puissance de commande de gain automatique, une unité d'accumulation de puissance de symbole et une unité de recherche de valeur de crête, dans lequel
l'unité de désembrouillage-désétalement et de corrélation de données au niveau de la puce est configurée pour recevoir le signal émis en sortie à partir de l'unité de canal de données et de calcul de phase initiale de code de brouillage en mode WCDMA ou le signal émis en sortie à partir de l'unité de canal de données et de configuration de phase initiale de code de brouillage en mode GSM et de données, pour désembrouiller les données IQ dans le signal émis en sortie et pour réaliser une accumulation cohérente des données IQ désembrouillées pour obtenir des données de symbole de la première antenne ;
l'unité de génération de données de symbole d'antenne est configurée pour calculer les données de symbole de la seconde antenne sur la base des données de symbole de la première antenne et pour émettre en sortie les données de symbole de la première antenne et de la seconde antenne vers l'unité d'accumulation cohérente des données de symbole ;
l'unité d'accumulation cohérente des données de symbole est configurée pour réaliser une accumulation cohérente des données de symbole reçues de la première antenne et de la seconde antenne et pour émettre en sortie les données de symbole de la première antenne et de la seconde antenne après l'accumulation cohérente à l'unité de calcul de la puissance de symbole et de pondération de la puissance de commande de gain automatique ;
l'unité de calcul de la puissance de symbole et de pondération de la puissance de commande de gain automatique est configurée pour calculer la puissance de symbole sur la base des données de symbole reçues de la première antenne et de la seconde antenne après une accumulation cohérente, pour réaliser une pondération de commande de gain automatique de la puissance de symbole calculée et ensuite pour émettre en sortie la puissance de symbole pondérée à l'unité d'accumulation de puissance de symbole ;
l'unité d'accumulation de puissance de symbole est configurée pour réaliser une accumulation non cohérente de la puissance de symbole après pondération de contrôle de gain automatique pour obtenir une table de puissance de symbole destinée à une recherche par trajets multiples et pour émettre la table de puissance de symbole vers l'unité de recherche de valeur de crête de puissance ; et
l'unité de recherche de valeur de crête de puissance est configurée pour mettre en oeuvre des informations par trajets multiples dans la table de puissances de symboles pour obtenir des informations par trajets multiples comprenant une puissance par trajets multiples et une frontière par trajets multiples et pour signaler la puissance par trajets multiples et la frontière par trajets multiples obtenues au logiciel système ;
dans lequel l'appareil de recherche par trajets multiples est configuré en outre pour calculer une puissance par trajets multiples PA en supposant un mode non STTD, pour calculer une puissance par trajets multiples PB en mode STTD, pour détecter le mode STTD si PA est approximativement égal à PB et pour détecter le mode non STTD si PA est environ deux fois PB.

2. Appareil selon la revendication 1, dans lequel à la fois le signal émis en sortie à partir de l'unité de canal de données et de calcul de phase initiale de code de brouillage en mode WCDMA et le signal émis en sortie à partir de l'unité de canal de données et de configuration de phase initiale de code de brouillage en mode GSM et l'unité de canal de données comprend une phase initiale de code de brouillage, une impulsion initiale corrélée et de données de QI.

3. Appareil selon la revendication 1, comprenant en outre une unité de calcul de récursion partagée et une unité de compensation de décalage de fréquence ;

   dans lequel l'unité de calcul de récursion est configurée pour calculer la phase initiale du code de brouillage, l'unité de compensation de décalage de fréquence est configurée pour compenser les données IQ collectées ;
   dans lequel l'unité de canal de données et de calcul de phase initiale de code de brouillage en mode WCDMA et l'unité de canal de données et de configuration de phase initiale de code de brouillage en mode GSM et l'unité de canal de données partagent l'unité de calcul de récursion et l'unité de compensation de décalage de fréquence ; ou
   l'unité de canal de données et de calcul de phase initiale de code de brouillage en mode WCDMA et l'unité de canal de données et de configuration de phase initiale de code de brouillage en mode GSM sont configurées avec leurs unités de calcul de récursion et de compensation de décalage de fréquence respectives.

4. Procédé de recherche par trajets multiples, appliqué à un système bimode GSM/WCDMA comprenant une station de base BS présentant une première antenne et une seconde antenne, dans lequel la station de base est configurée pour transmettre des signaux soit dans une diversité de transmission espace-temps en mode STTD ou un mode non STTD, le procédé de recherche par trajets multiples consiste à :

   déterminer et signaler un mode de travail actuel d'un terminal par la couche supérieure d'un système ; et

réaliser une recherche de cellule WCDMA en fonction du mode de travail actuel du terminal, **caractérisé en ce que** lorsque le mode de travail actuel du terminal est un mode GSM, l'étape de réalisation de la recherche de cellule WCDMA en fonction du mode de travail actuel du terminal comprend :

lorsqu'une trame inactive GSM arrive, une unité de canal de données et de configuration de phase initiale de code de brouillage en mode GSM et de canal de données lance la collecte de données IQ et mémorise les données IQ collectées dans une mémoire tampon ;

à la fin de la mémorisation, le traitement des données IQ pour obtenir des données de symbole ;

configurer le décalage d'intervalle de temps et du décalage de symbole ;

réaliser l'accumulation cohérente des données de symbole ;

calculer la puissance par trajets multiples ; et

lancer la recherche par trajets multiples ;

dans lequel, lors du lancement de la collecte de données IQ, le procédé comprend en outre :

la réception des données IQ de la couche supérieure, d'un numéro de série de code de brouillage, d'un signal d'activation, d'un signal de décalage d'intervalle de temps et d'un signal de décalage de symbole ;

à la fin de la mémorisation et avant l'étape de traitement des données IQ, le procédé comprenant en outre :

la collecte hors ligne des données IQ, la réalisation d'une compensation de décalage de fréquence au niveau de la puce et l'envoi des données IQ compensées, de la phase initiale du code de brouillage obtenu par le calcul effectué par une unité de calcul de récursion et du signal d'impulsion initial corrélé à une unité de traitement et de recherche par trajets multiples au niveau de la puce comme signaux de sortie ;

l'étape de traitement des données IQ comprend :

l'unité de traitement et de recherche par trajets multiples au niveau de la puce réalise le traitement de données au niveau de la puce des signaux émis en sortie reçus pour obtenir des données de symbole de la première antenne et de la seconde antenne ;

dans lequel l'étape de réalisation du traitement de données au niveau de la puce comprend :

le désembrouillage des données IQ ;

la réalisation d'une accumulation cohérente des données IQ désembrouillées pour obtenir des données de symbole de la première antenne ; et

le calcul des données de symbole de la seconde antenne en fonction des données de symbole de la première antenne ;

l'étape consistant à réaliser l'accumulation cohérente des données de symbole consiste à réaliser l'accumulation cohérente des données de symbole de la première antenne et de la seconde antenne ;

l'étape de calcul de la puissance par trajets multiples comprend :

le calcul de la puissance de symbole en fonction du résultat de la réalisation de l'accumulation cohérente des données de symbole de la première antenne et de la seconde antenne et la réalisation de la pondération de commande de gain automatique de la puissance de symbole ; et

la réalisation de l'accumulation non cohérente de la puissance de symbole après la pondération de commande de gain automatique pour obtenir une table de puissance de symbole, obtenir des informations par trajets multiples dans la table de puissance de symboles par la recherche de valeur de crête de puissance et enfin obtenir la puissance par trajets multiples, dans lequel la puissance par trajets multiples obtenue et la localisation par trajets multiples sont signalées au logiciel pour lancer la recherche par trajets multiples ;

le procédé comprenant en outre les étapes consistant à :

calculer une puissance par trajets multiples PA en supposant un mode non STTD, calculer une puissance par trajets multiples PB en supposant un mode STTD, détecter le mode STTD si PA est approximativement égal à PB et détecter le mode non STTD si PA est environ deux fois PB.

5.  Procédé selon la revendication 4, comprenant en outre :

la détermination d'existence d'un trajet multiple efficace dans la recherche par trajets multiples ;

si oui, l'arrêt de la recherche, sinon la poursuite de la configuration d'une pluralité de décalages de phase et le lancement de la recherche par trajets multiples ;

après avoir traversé tous les décalages de phase, si aucun trajet multiple efficace n'est recherché, l'échec de la recherche de cellule WCDMA en cours étant signalé à la couche supérieure du système.

6. Procédé selon la revendication 4, dans lequel l'étape d'obtention phase initiale du code de brouillage par le calcul par l'unité de calcul de récursion comprend : en fonction du numéro de série du code de brouillage obtenu, du décalage d'intervalle de temps et du décalage de symbole, l'obtention de la phase initiale du code de brouillage par la récursion puce par puce par l'unité de calcul de récursion pendant le processus de génération de séquence de code de brouillage.

7. Procédé de recherche par trajets multiples, appliqué à un système bimode GSM/WCDMA comprenant une station de base BS présentant une première antenne et une seconde antenne, dans lequel la station de base est configurée pour transmettre des signaux soit dans une diversité de transmission espace-temps en mode STTD ou un mode non STTD, le procédé de recherche par trajets multiples consiste à :

déterminer et signaler un mode de travail actuel d'un terminal par la couche supérieure d'un système ; et
réaliser une recherche de cellule WCDMA en fonction du mode de travail actuel du terminal, **caractérisé en ce que** lorsque le mode de travail actuel du terminal est un mode WCDMA, l'étape de réalisation de la recherche de cellule WCDMA en fonction du mode de travail actuel du terminal comprend :

une unité de canal de données et de calcul de phase initiale de code de brouillage en mode WCDMA recevant des données IQ de la couche supérieure, un numéro de série de code de brouillage, une bordure de départ et un comptage Mrtr (transmission et réception de radio mobile) ;
la collecte en ligne des données IQ, la réalisation d'une compensation de décalage de fréquence au niveau de la puce, l'envoi des données IQ compensées, de la phase initiale du code de brouillage obtenu par le calcul par une unité de calcul de récursion et du signal d'impulsion initial corrélé à une unité de traitement et de recherche par trajets multiples au niveau de la puce comme signaux de sortie ; et
l'unité de traitement et de recherche par trajets multiples au niveau de la puce réalise le traitement de données au niveau de la puce des signaux de sortie reçus pour obtenir des données de symbole de la première antenne et de la seconde antenne, réalise l'accumulation cohérente des données de symbole de la première antenne et de la seconde antenne, calcule la puissance par trajets multiples et effectue une recherche par trajets multiples ;

dans lequel l'étape de réalisation du traitement de données au niveau de la puce comprend :

le désembrouillage des données IQ ; la réalisation de l'accumulation cohérente des données IQ désembrouillées pour obtenir des données de symbole de la première antenne ; et
le calcul des données de symbole de la seconde antenne en fonction des données de symbole de la première antenne ;

l'étape de réalisation de l'accumulation cohérente des données de symbole fait référence à la réalisation de l'accumulation cohérente des données de symbole de la première antenne et de la seconde antenne ;
l'étape de calcul de la puissance par trajets multiples comprend :

le calcul de la puissance des symboles en fonction du résultat de la réalisation de l'accumulation cohérente des données de symboles à double antenne et la réalisation de la pondération de contrôle automatique du gain de la puissance des symboles ; et
la réalisation d'une accumulation non cohérente de la puissance de symbole après la pondération de commande de gain automatique pour obtenir une table de puissance de symbole et obtenir des informations par trajets multiples dans la table de puissance de symboles par la recherche de valeur de crête de puissance et enfin obtenir la puissance par trajets multiples, la puissance par trajets multiples obtenue et les localisations par trajets multiples étant signalées au logiciel pour lancer la recherche par trajets multiples ;

le procédé comprenant en outre les étapes consistant à :
calculer une puissance par trajets multiples PA en supposant un mode non STTD, calculer une puissance par trajets multiples PB en supposant un mode STTD, détecter le mode STTD si PA est approximativement égal à PB et détecter le mode non STTD si PA est environ deux fois PB.

Fig. 1

Fig. 2

Fig. 3

## Fig. 4

Configuring starting border

Mrtr counting

Comparer

Possible starting border

Subtractor

Time slot offset and symbol offset

Border condition decision device

0/1/2 symbol

Scrambling code serial number

Time slot/ symbol adder

Actual starting border

Correlated initial pulse

Recursive computing unit

Scrambling code initial phase

IQ data

Chip-level frequency offset compensation

IQ data after compensation

WCDMA mode scrambling code initial phase calculating and data channel unit

## Fig. 5

GSM CAMP mode enable

Pulse generator

Correlation initial pulse

IQ data buffering ending, interruption

IQ buffering data reading initial pulse

IQ data buffering enable

IQ buffering RAM interface

IQ buffering RAM

IQ data

Chip-level frequency offset compensation

IQ data after compensation

Time slot offset and symbol offset

Scrambling code serial number

Recursion computing unit

Scrambling code initial phase

GSM mode scrambling code initial phase configuring and data channel unit

## Fig. 6

Scrambling code initial phase → IQ data → Correlated initial pulse

**Chip-level data descrambling-despreading and correlating unit**

Generating scrambling code sequence → Scrambling code sequence → Data descrambling-despreading → Descrambled-despread data → Correlator set

Symbol data ↓

## Fig. 7

Symbol data ↓

**Dual-antenna symbol data generating unit**

Symbol counting
Transmit diversity mode selection → STTD mode symbol pattern → Symbol pattern indicating signal → Generating second-antenna symbol data under STTD mode

Dual-antenna symbol data ↓

## Fig. 8

Dual-antenna symbol data before coherent accumulation ↓

**Symbol data coherent accumulating unit**

Symbol buffering ← Symbol data ← Symbol coherent accumulation

Dual-antenna symbol data after coherent accumulation ↓

## Fig. 9

Dual-antenna symbol data after
coherent accumulation

Dual-antenna
symbol power

| Symbol power calculaiton | → | Adder |

Symbol power

AGC value → | AGC power calculation | AGC power → | AGC power weighting |

Symbol power calculating and
AGC power weighting unit

Weighted symbol power

## Fig. 10

Weighted symbol
power

| Weighted symbol power buffering | ← | accumulation of Weighted symbol power |

Weighted symbol power
accumulating unit

Symbol power
table

## Fig. 11

## Fig. 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2004252656 A1, SHIU OA-SHAN [US]
- EP 0825737 A1
- US 2005047492 A1, AMERGA MESSAY [US]